# EUROPEAN PATENT APPLICATION

(11) **EP 3 928 883 A1**
(43) Date of publication of application: **29.12.2021**
(21) Application number: 21181192.2
(22) Date of filing: 23.06.2021
(51) Int. Cl.: B09B 3/00, B65B 69/00

(54) **EQUIPMENT FOR THE RECOVERY OF SPRAY CANS**

(30) Priority: 26.06.2020 IT 202000015553
(71) Applicant: Ecodent S.r.l., 37069 Villafranca di Verona (VR) (IT)
(72) Inventor: MAGGIA, Marco, 37069 Villafranca di Verona (VR) (IT); DALL'OCA, Marco, 37069 Villafranca di Verona (VR) (IT)
(74) Representative: Brunacci, Marco

(57) **Abstract**

The equipment (1) for the recovery of spray cans comprises:
- one basic frame (2) for the support on a reference plane (P);
- one operating chamber (3) associated with the basic frame (2) and provided with:
- one inlet section (4) of at least one spray can (S) to be treated; - one outlet section (5) of the treated spray can (S);
wherein the spray can (S) to be treated comprises one metal casing (M) containing liquid residues (L) and gaseous residues to be separated from the latter;
- one treatment assembly (11) of the at least one spray can (S), internally associated at least partly with the operating chamber (3) and adapted to crush and break said spray can (S) to allow the separation of the liquid residues (L) and of the gaseous residues from the metal casing (M).

## Description

### Technical Field

The present invention relates to a piece of equipment for the recovery of spray cans.

### Background Art

In the waste disposal industry, the recovery of spray cans is a complex process due to the potential hazardous nature of this type of waste.

The spray can is a container made of metal material and adapted to contain a liquid product to be dispensed and a propellant gas that allows it to be dispensed as a spray through a special valve.

The propellant gas of the type e.g. of propane, butane, isobutane, is in compressed form and escapes, through the valve, by carrying part of the liquid product. The gas then separates from the liquid product, dissolving in the external environment.

Spray cans are generally used to dispense paints, insecticidal or cleaning chemicals, industrial lubricants, perfumes and deodorants.

The disposal of these spray cans is aimed at recovering the metal material from which the casing is made and collecting the propellant gas and liquid product residues to allow proper disposal thereof.

However, the presence of propellant gases, combined with any residual flammable liquids, poses a highly elevated risk of combustion or explosion, especially when a large number of spray cans are handled.

For this reason, the disposal process is usually carried out in facilities that process a limited number of spray cans.

To date, this disposal process comprises an initial treatment station inside which an inert gas, such as nitrogen, is introduced to reduce the amount of oxygen. Inside such a treatment station, spray cans are torn apart to allow liquid and gaseous residues to escape from the metal casing.

At the end of this operation, the liquid and gaseous residues are removed and transferred to further disposal stations.

The metal casings, in turn, are sent to a second treatment station wherein they are crushed and compacted by means of special presses.

Finally, each metal casing is transferred to further treatment stations where it is treated to allow for the recovery and reuse of the metal components.

In the light of these considerations, it is clear that the danger of such a disposal process involves the use of numerous appliances that imply long processing times, which inevitably affect the costs related thereto.

In addition, the recovery stations of known type do not allow for proper disposal of the liquid and gaseous residues.

### Description of the Invention

The main aim of the present invention is to devise a piece of equipment for the recovery of spray cans which allows reducing the processing time thereof. Within this technical aim, one additional object of the present invention is to reduce frequent interruptions in recovery and/or disposal operations of spray cans compared to the solutions of known type.

Another object of the present invention is to devise a piece of equipment for the recovery of spray cans which allows for an efficient recovery while being safe for the environment and the operators.

A further object of the present invention is to devise a piece of equipment for the recovery of spray cans which allows optimizing component separation and the recovery and/or disposal thereof.

Another object of the present invention is to devise a piece of equipment for the recovery of spray cans which allows overcoming the aforementioned drawbacks of the prior art within a simple, rational, easy and effective to use as well as affordable solution.

The aforementioned objects are achieved by the present piece of equipment for the recovery of spray cans having the characteristics of claim 1.

### Brief Description of the Drawings

Other characteristics and advantages of the present invention will become more apparent from the description of a preferred, but not exclusive, embodiment of a piece of equipment for the recovery of spray cans, illustrated by way of an indicative, yet non-limiting example, in the accompanying tables of drawings wherein:

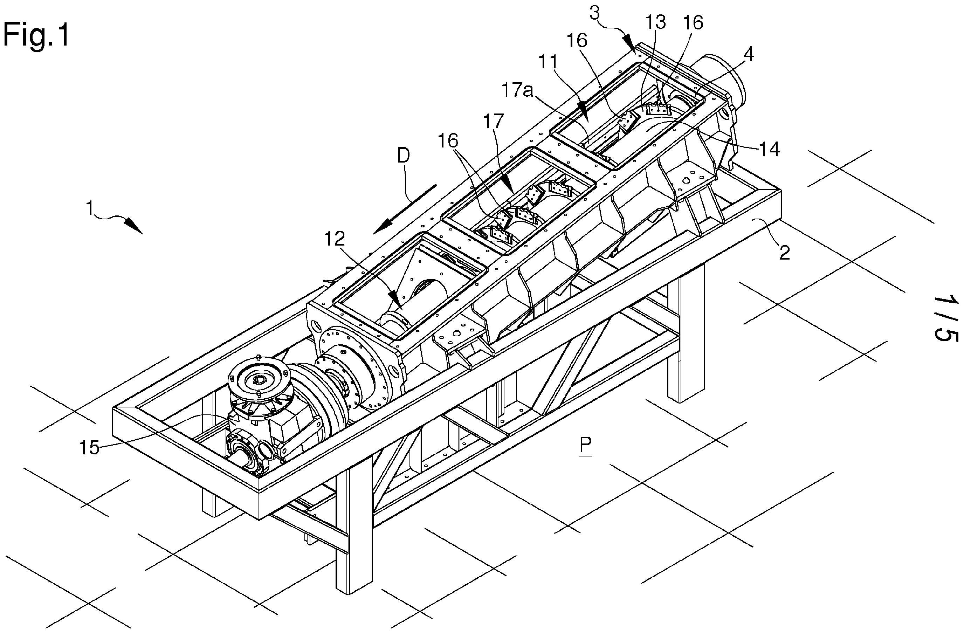

Figure 1 is an axonometric view of a piece of equipment for the recovery of spray cans according to the invention;

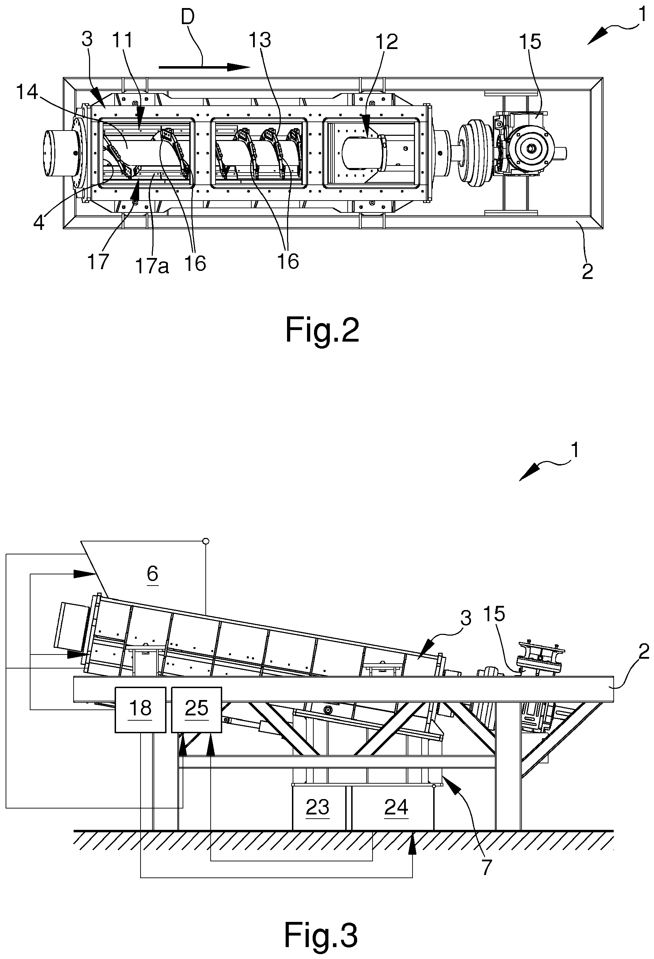

Figure 2 is a top view of the piece of equipment according to the invention;
Figure 3 is a side view of the piece of equipment according to the invention;
Figure 4 is a cutaway side view of the piece of equipment according to the invention;
Figure 5 shows a magnifying view of the detail in Figure 4;
Figure 6 is an exploded view of a component of the piece of equipment according to the invention;

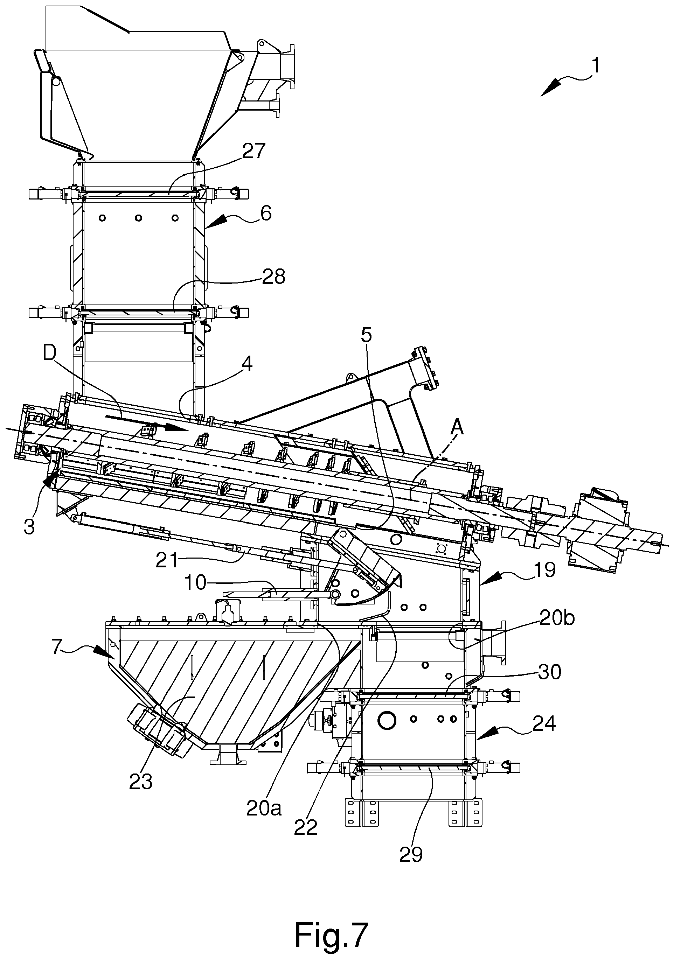

Figure 7 is a detailed, cross-sectional side view of the piece of equipment according to the invention.

### Embodiments of the Invention

With particular reference to such figures, reference numeral 1 globally indicates a piece of equipment for the recovery of spray cans.

In the context of the present disclosure, the term "spray can" means a container made of a metallic material containing a liquid product to be dispensed and a propellant gas, such as e.g., propane, butane, isobutane, which allows it to be dispensed in the form of a spray.

In detail, the term "spray can" relates to both spent spray cans and full spray cans.

The spray cans S to be subjected to a recovery treatment still contain liquid residues L inside them, which consist partly of the liquid product to be dispensed, and gaseous residues of propellant gas.

Thus, each spray can S to be treated comprises at least one metal casing M containing the liquid residues L and the gaseous residues to be separated from the latter.

The disposal of these spray cans S is aimed at recovering the metal material from which the metal casing M is made, the gaseous residues and the liquid residues L to allow for the proper disposal thereof.

The piece of equipment 1 according to the invention comprises at least one basic frame 2 for the support on a reference plane P.

In particular, the reference plane P is substantially horizontal.

Preferably, the reference plane P coincides with the ground.

The piece of equipment 1 also comprises at least one operating chamber 3 associated with the basic frame 2 and provided with at least one inlet section 4 of at least one spray can S to be treated and at least one outlet section 5 of the treated spray can S.

The operating chamber 3 has an elongated conformation, wherein the inlet section 4 and the outlet section 5 are arranged at the ends of the operating chamber itself.

Conveniently, the operating chamber 3 is inclined with respect to the reference plane P and the inlet section 4 is positioned at a higher level than the outlet section 5.

In other words, the operating chamber 3 is arranged with respect to the reference plane P neither horizontally nor vertically, and the outlet section 5 faces downwards.

In the context of the present disclosure, adjectives such as "high", "low", "lower" and "upper" relate to a configuration in which the reference plane P is horizontal.

This particular arrangement facilitates the movement of the spray can S towards the outlet section 5, through which it exits.

The piece of equipment 1 according to the present invention allows the treatment of a plurality of spray cans S. In fact, the inlet section 4 is configured to allow the simultaneous passage of a plurality of spray cans S, so as to optimize processing times.

For this purpose, the piece of equipment 1 also comprises a hopper 26 provided with a lid, adapted to contain the spray cans S to be treated.

Conveniently, the piece of equipment 1 comprises at least one entrance gate 27, 28 arranged at the point where the inlet section 4 is located and configured to isolate the operating chamber 3 from the outside.

In more detail, the entrance gate 27, 28 separates the operating chamber 3 from the hopper 26.

Upon opening the entrance gate 27, 28, the spray cans S flow inside the operating chamber 3.

Advantageously, the piece of equipment 1 comprises at least one air-tight pre-treatment chamber 6, associated with the operating chamber 3 at the point where the inlet section 4 is located and adapted to allow loading the spray cans S.

In essence, the pre-treatment chamber 6 is adapted to contain the plurality of spray cans S awaiting to undergo the recovery operations.

Specifically, the piece of equipment 1 comprises a first entrance gate 27 positioned between the pre-treatment chamber 6 and the outside and a second entrance gate 28 positioned between the pre-treatment chamber 6 and the operating chamber 3.

The first entrance gate 27 and the second entrance gate 28 are alternately openable so as to isolate the operating chamber 3 from the outside.

The piece of equipment 1 is provided with at least one treatment assembly 11 of the spray cans S, internally associated at least partly with the operating chamber 3 and adapted to crush and break each spray can S, to allow the separation of the liquid residues L and of the gaseous residues from the metal casing M.

The function of the treatment assembly 11 is to open the spray cans S by crushing and tearing them to allow the liquid residues L and gaseous residues to escape.

In detail, the term "treatment assembly" 11 relates to an assembly configured to tear, crush, and compact the spray cans S.

Conveniently, the treatment assembly 11 comprises movement means 12 associated with the operating chamber 3 and adapted to move the spray cans S along a direction of forward movement D extending from the inlet section 4 to the outlet section 5.

Therefore, the movement means 12 allow the transit of the spray cans S inside the operating chamber 3 thus allowing them to be displaced until they are released through the outlet section 5, at the end of the crushing and tearing operations.

The movement means 12 comprise at least one auger body 13, 14 operable in rotation around an axis of reference A.

The axis of reference A is transverse to the reference plane P.

Preferably, the axis of reference A is substantially parallel to the direction of forward movement D.

Advantageously, the axis of reference A defines with the reference plane P an angle of amplitude between 5° and 15°.

Preferably, the axis of reference A defines with the reference plane P an angle of amplitude equal to 10°.

In the embodiment shown in the figures, the operating chamber 3 and the auger body 13, 14 are substantially coaxial; the inclination of the operating chamber 3 and the arrangement of the auger body 13, 14 inside it cause the direction of forward movement D to be directed downwards, i.e., towards the end of the operating chamber 3 closest to the reference plane P.

The auger body 13, 14 comprises at least one flighting element 13 associated with a motor-driven shaft element 14 and operable in rotation around the axis of reference A.

The flighting element 13 is shaped so as to allow the movement of the spray cans S from the inlet section 4 to the outlet section 5.

In other words, proceeding along the direction of forward movement D, the metal casings M are squeezed together and through the contact with the flighting element 13 and the internal walls of the operating chamber 3.

The pitch of the flighting element 13 is decreasing along the direction of forward movement D.

The decreasing pitch is adapted to facilitate the collection of the metal casings M by gathering them in the proximity of the outlet section 5.

Furthermore, the decreasing pitch is adapted to allow compaction of the metal casing M during the movement thereof from the inlet section 4 to the outlet section 5.

More specifically, the volumetric footprint of each spray can S is progressively reduced in a manner proportional to the reduction of the pitch of the flighting element 13; added to this is the fact that each spray can S cyclically contacts the internal walls of the operating chamber 3 in abutment during the rotation of the flighting element 13.

In this regard, the treatment assembly 11 comprises at least one gripping element 16 associated with the flighting element 13 and adapted to allow, following the rotation of the auger body 13, 14, dragging and pushing the spray can S towards the internal walls of the operating chamber 3 to break the metal casing M thereof.

As shown in the figures, the gripping element 16 is of the type of a rostrum. Advantageously, the gripping element 16 faces, with respect to the shaft element 14, outwardly from the flighting element 13.

Specifically, the gripping element 16 faces the internal walls of the operating chamber 3.

In particular, as shown in the figures, the treatment assembly 11 comprises a plurality of gripping elements 16 associated with the flighting element 13.

The gripping elements 16 are associated, with respect to the shaft element 14, with the external perimeter edge of the flighting element 13 and are evenly distributed thereon along the direction of forward movement D.

In more detail, the flighting element 13 has a series of gripping elements 16 substantially equidistant from each other.

The gripping elements 16 have the function of grasping the spray cans S, pulling them away from the bottom of the operating chamber 3 and dragging them along the walls of the operating chamber itself during the rotation of the auger body 13, 14, causing the metal casing M to tear and compact.

In essence, the movement means 12 and the gripping elements 16 cause the spray cans S to be mixed, which promotes their interaction with each other and with the internal walls of the operating chamber 3.

Moreover, the particular expedient of providing the flighting element 13 with decreasing pitch allows increasing the frequency of the gripping elements 16 in the proximity of the outlet section 5, thus allowing easily grasping and dragging even shreds of the metal casing M of small dimensions, thus promoting further tearing.

Advantageously, the treatment assembly 11 comprises cutting means 17 associated with the internal walls of the operating chamber 3 and adapted to cut the spray can S in order to allow the outflow of the liquid residues L and gaseous residues.

The combined action of the gripping elements 16 and of the cutting means 17, following the movement of the auger body 13, 14, promotes the opening of the spray can S and the separation of the liquid residues L and of the gaseous residues from the metal casing M.

In this case, the cutting means 17 comprise at least one blade element 17a extending parallel to the direction of forward movement D.

Appropriately, the movement means 12 comprise a motor member 15 associated with the shaft element 14 and adapted to set the latter in rotation around the axis of reference A.

The motor member 15 is arranged externally to the operating chamber 3.

The operating chamber 3 comprises at least one separation and collection assembly 7 positioned at point where the outlet section 5 is located and adapted to allow for the mutual separation of the liquid residues L from the metal casings M.

Through the separation and collection assembly 7, the piece of equipment 1 allows, therefore, recovering not only the compacted metal casings M and any other solid residues, but also the liquid residues L in order to allow a correct disposal of the same.

The separation and collection assembly 7 comprises at least one separation chamber 19 associated with the operating chamber 3 at the point where the outlet section 5 is located.

The separation and collection assembly 7 comprises at least one swing element 8 associated in a movable manner with the operating chamber 3.

The swing element 8 is movable in rotation between a stop configuration, wherein it partly obstructs the outlet section 5, thus retaining the metal casings M and allowing the liquid residues L to escape, and a release configuration, wherein it completely clears the outlet section 5 and allows the metal casings M to escape following processing.

In the release configuration, the swing element 8 is arranged inside the separation chamber 19.

Specifically, the swing element 8 comprises a grid portion 8a defining a plurality of longitudinal cracks which, in the abutment configuration, allow the liquid residues L to escape through the outlet section 5 and, at the same time, the solid residues to be blocked above the swing element itself.

The separation and collection assembly 7 is, in addition, provided with an actuator device 10 of the swing element 8, associated with the separation chamber 19 and adapted to move the swing element itself between the abutment configuration and the release configuration.

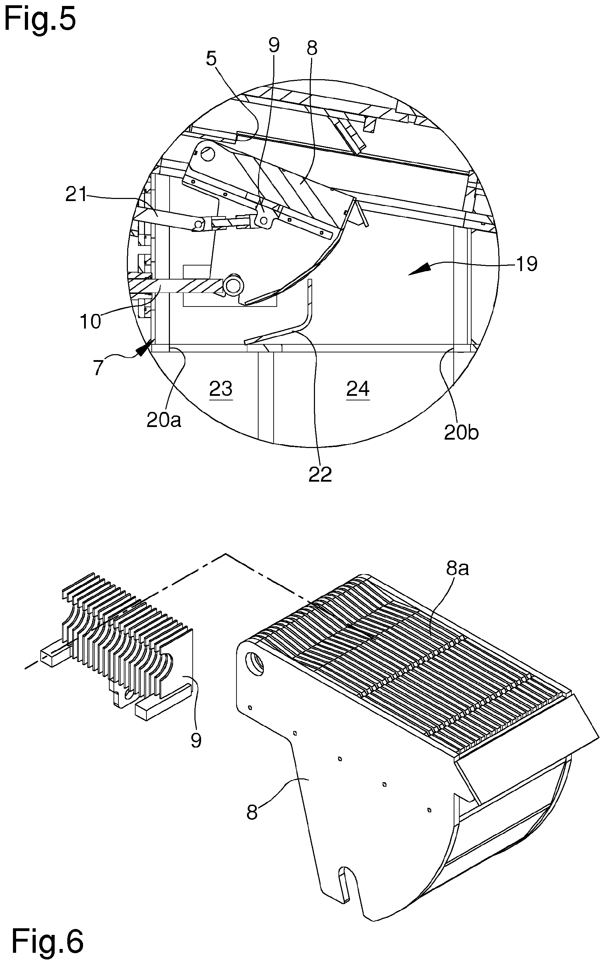

As shown in detail in Figure 6, the separation and collection assembly 7 is provided with a comb element 9 associated with the swing element 8 at the point where the grid portion 8a is located and adapted to abut at least partly in said cracks.

The comb element 9 is movable sliding on the swing element 8 along the extension of the cracks; this movement is adapted to clear the grid portion 8a from any solid residues that could obstruct the cracks and prevent the liquid residues L from escaping.

The separation and collection assembly 7 is provided with an actuator element 21 of the comb element 9, which is associated with the separation chamber 19 and is adapted to move by sliding the comb element itself.

Conveniently, the separation and collection assembly 7 is provided with at least one transit portion 20a, 20b, defined in the separation chamber 19 and configured to allow the outflow of the liquid residues L and of the metal casings M, respectively.

In more detail, the transit portion 20a, 20b comprises a liquids transit portion 20a, through which the aforementioned liquid residues L escape, and a solids transit portion 20b, through which the metal casings M and any other solid residues escape.

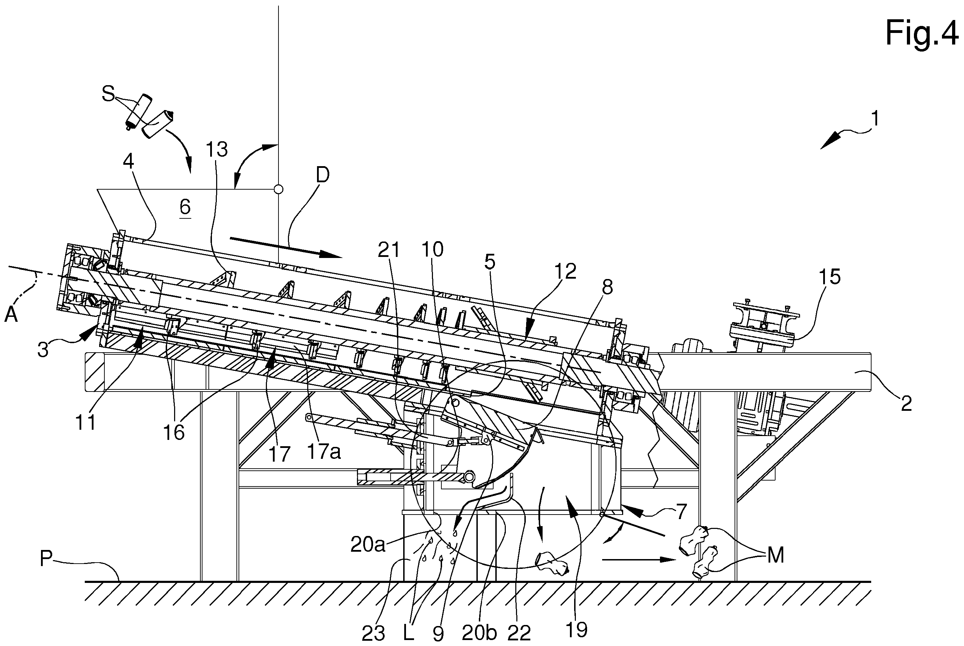

As shown in Figures 4 and 5, the separation and collection assembly 7 comprises at least one conveyor element 22 associated with the separation chamber 19 and adapted to convey the liquid residues L from the outlet section 5 towards the liquids transit portion 20a.

The piece of equipment 1 is also provided with collection means 23 associated with the liquids transit portion 20a and adapted to remove the liquid residues L from the operating chamber 3 to allow these to be collected.

The collection means 23 comprise, e.g., a collection tank communicating with the outside through appropriate piping.

Conveniently, the piece of equipment 1 comprises at least one exit gate 29, 30 arranged at the point where the transit portion 20a, 20b is located and configured to isolate the operating chamber 3 from the outside.

In particular, the exit gate 29, 30 is arranged at the point where the solids transit portion 20b is located.

Advantageously, the piece of equipment 1 also comprises at least one air-tight unloading chamber 24, associated with the operating chamber 3 at the point where the transit portion 20a, 20b is located and adapted to allow the collection of the metal casings M.

In particular, the unloading chamber 24 is associated with the solids transit portion 20b.

The function of the unloading chamber 24 is to temporarily contain the metal casings M already treated while waiting for the end of the treatment cycle. Specifically, the piece of equipment 1 comprises a first exit gate 29 positioned between the unloading chamber 24 and the outside and a second exit gate 30 positioned between the unloading chamber 24 and the operating chamber 3. Upon opening of the first exit gate 29, the unloading chamber 24 is opened to allow recovery of the metal casings M.

The first entrance gate 27 and the second entrance gate 28 are alternately openable so as to isolate the operating chamber 3 from the outside.

During the treatment operations, as a result of tearing of the metal casing M, the gaseous residues are dispersed inside the operating chamber 3. The gaseous residues may be of various kinds and, by mixing with oxygen, can lead to combustion and/or explosion.

To this end, the piece of equipment 1 comprises suction means 25 of the gaseous residues, associated with the basic frame 2 and connected in a fluid-operated manner to at least one of the operating chamber 3, the pre-treatment chamber 6 or the unloading chamber 24.

Preferably, the suction means 25 are connected in a fluid-operated manner to the operating chamber 3, to the pre-treatment chamber 6 and to the unloading chamber 24.

In particular, the suction means 25 are adapted to suck in the gases that are released inside the operating chamber 3 following the opening of the spray cans S.

In addition, the suction means 25 are adapted to suck in any gaseous residues that flow into the pre-treatment chamber 6 and the unloading chamber 24 upon the opening of the second entrance gate 28 and of the second exit gate 30, respectively, and any oxygen that is introduced into the same following the opening of the first entrance gate 27 and of the first exit gate 29, respectively. Conveniently, the piece of equipment 1 comprises generation means for generating an inert atmosphere 18, associated with the basic frame 2 and connected in a fluid-operated manner to at least one of the operating chamber 3, the pre-treatment chamber 6 or the unloading chamber 24 and adapted to generate an inert atmosphere inside at least one of them.

Preferably, the generation means for generating an inert atmosphere 18 are connected in a fluid-operated manner to the operating chamber 3, to the pre-treatment chamber 6 and to the unloading chamber 24.

In this way, the piece of equipment 1 allows not only the inertization of the operating chamber 3, but also of the pre-treatment chamber 6 and of the unloading chamber 24 following the opening of the entrance gates 27, 28 and of the exit gates 29, 30, respectively.

The generation means for generating an inert atmosphere 18 are adapted to operate in conjunction with the suction means 25 in order to reduce the amount of oxygen in the aforementioned chambers 3, 6, 24.

Specifically, the suction means 25 move the gaseous residues away, while the generation means for generating an inert atmosphere 18 inject an inert gas. This allows minimizing the risk of combustion and/or explosion due to the possible presence of gaseous residues and any flammable liquid residues L. Preferably, the inert gas comprises nitrogen.

The first entrance gate 27 is openable alternately with the second entrance gate 28 to allow for the maintenance of an inert atmosphere inside the operating chamber 3 during the loading of the spray cans S.

Similarly, the first exit gate 29 is openable alternately with the second exit gate 30 to allow for the maintenance of an inert atmosphere inside the operating chamber 3 during the collection of the metal casings M.

Basically, the loading of spray cans S to be treated and the unloading of metal casings M is carried out in such a way as to preserve the inert atmosphere so as to carry out the treatment and compaction operations in an extremely safe manner and to allow the treatment of the spray cans S by continuous cycle. In other words, the piece of equipment 1 allows the loading of the spray cans S, the treatment thereof and the escape of the metal casings M and of the liquid residues L thus avoiding interruptions aimed at the oxygen removal of the gaseous residues.

The operation of the equipment 1 according to the present invention is as follows.

Initially, the first entrance gate 27 is opened and the second entrance gate 28 is closed; at the same time, the first exit gate 29 is closed and the second exit gate 30 is opened.

The operating chamber 3 and the unloading chamber 24 are, thus, isolated with respect to the external environment, and the generation means for generating an inert atmosphere 18 inject the inert gas therein to generate an atmosphere having reduced oxygen content.

The spray cans S to be treated are loaded into the pre-treatment chamber 6 to undergo recovery operations.

The first entrance gate 27 is closed and the pre-treatment chamber 6 is, in turn, inertized through the generation means for generating an inert atmosphere 18.

The second entrance gate 28 is, then, opened to allow the spray cans S to flow inside the operating chamber 3. Upon completion, the second entrance gate 28 is closed again to isolate the operating chamber 3 and allow a new loading of the spray cans into the pre-treatment chamber 6.

At this point, the auger body 13, 14 is operated to allow the spray cans S to be moved along the direction of forward movement D.

During the rotation of the auger body 13, 14, the gripping elements 16 raise the spray cans S from the bottom of the operating chamber 3 and move them into contact with the walls of the operating chamber itself, where the interaction with the cutting means 17 leads to the tearing and crushing of the metal casing M and the escape of the liquid residues L and of the gaseous residues.

The gaseous residues are moved away from the operating chamber 3 through the suction means 25, while the liquid residues L fall by gravity towards the outlet section 5 and escape through the grid portion 8a of the swing element 8. The conveyor element 22 allows moving the liquid residues L away, which are collected by the collecting means 23 through the liquids transit portion 20a.

At the same time, the metal casings M are carried by the auger body 13, 14 along the direction of forward movement D and, in the proximity of the outlet section 5, are compacted by the flighting element 13.

Next, the swing element 8 is brought to the release configuration to allow the metal casings M to escape from the operating chamber 3.

The metal casings M flow into the unloading chamber 24 through the solids transit portion 20b.

Finally, the second exit gate 30 is closed to isolate the operating chamber 3 and the first exit gate 29 is opened to allow moving away and recovering the metal casings M.

The first exit gate 29 is then closed again and the unloading chamber 24 is made inert through the generation means for generating an inert atmosphere 18 so as to begin a new cycle of operations without interruption.

It has in practice been ascertained that the described invention achieves the intended objects, and in particular the fact is emphasized that the equipment for the recovery of spray cans allows carrying out the operations of opening the spray cans and processing these through the use of a single machine. Moreover, the synergic combination of the auger body with decreasing pitch and the cutting means and the presence of the separation and collection assembly allows carrying out the recovery operations in a practical and easy manner. Last but not least, the equipment according to the invention allows carrying out the recovery operations by continuous cycle and not in separate and independent phases, thus avoiding the frequent interruptions to remove oxygen and gaseous residues.

Finally, the equipment according to the invention allows carrying out the recovery operations in an extremely safe manner thanks to the presence of the means for generating an inert atmosphere and to the possibility to isolate the operating chamber and the pre-treatment and unloading chambers from the outside.

## Claims

1. Equipment (1) for the recovery of spray cans, **characterized by** the fact that it comprises:
- at least one basic frame (2) for the support on a reference plane (P);
- at least one operating chamber (3) associated with said basic frame (2) and provided with:
- at least one inlet section (4) of at least one spray can (S) to be treated;
- at least one outlet section (5) of said at least one treated spray can (S); wherein said spray can (S) to be treated comprises at least one metal casing (M) containing liquid residues (L) and gaseous residues to be separated from the latter;
- at least one treatment assembly (11) of said at least one spray can (S), internally associated at least partly with said operating chamber (3) and adapted to crush and break said spray can (S) to allow the separation of said liquid residues (L) and of said gaseous residues from said metal casing (M).

2. Equipment (1) according to claim 1, **characterized by** the fact that said treatment assembly (11) comprises movement means (12) associated with said operating chamber (3) and adapted to move said at least one spray can (S) along a direction of forward movement (D) extending from said inlet section (4) to said outlet section (5).

3. Equipment (1) according to one or more of the preceding claims, **characterized by** the fact that said movement means (12) comprise at least one auger body (13, 14) operable in rotation around an axis of reference (A), wherein said auger body (13, 14) comprises at least one flighting element (13) associated with a motor-driven shaft element (14) and operable in rotation around said axis of reference (A), the pitch of said flighting element (13) being decreasing along said direction of forward movement (D).

4. Equipment (1) according to one or more of the preceding claims, **characterized by** the fact that said treatment assembly (11) comprises at least one gripping element (16) associated with said flighting element (13) and adapted to allow, following the rotation of said auger body (13, 14), dragging and pushing said spray can (S) towards the internal walls of said operating chamber (3) to break said metal casing (M).

5. Equipment (1) according to one or more of the preceding claims, **characterized by** the fact that said treatment assembly (11) comprises a plurality of gripping elements (16) associated with said flighting element (13).

6. Equipment (1) according to one or more of the preceding claims, **characterized by** the fact that said gripping elements (16) are associated, with respect to said shaft element (14), to the external perimeter edge of said flighting element (13).

7. Equipment (1) according to one or more of the preceding claims, **characterized by** the fact that said treatment assembly (11) comprises cutting means (17) associated with the internal walls of said operating chamber (3) and adapted to cut said spray can (S) in order to allow the outflow of said liquid residues (L) and gaseous residues.

8. Equipment (1) according to one or more of the preceding claims, **characterized by** the fact that said cutting means (17) comprise at least one blade element (17a) extending parallel to said direction of forward movement (D).

9. Equipment (1) according to one or more of the preceding claims, **characterized by** the fact that said operating chamber (3) comprises at least one separation and collection assembly (7) positioned at said outlet section (5) and adapted to allow for the mutual separation and collection of said liquid residues (L) and of said metal casings (M).

10. Equipment (1) according to one or more of the preceding claims, **characterized by** the fact that said separation and collection assembly (7) comprises at least one transit portion (20a, 20b) configured to allow the outflow of said liquid residues (L) and of said metal casings (M), respectively.

11. Equipment (1) according to one or more of the preceding claims, **characterized by** the fact that it comprises at least one entrance gate (27, 28) positioned at the point where said inlet section (4) is located and at least one exit gate (29, 30) positioned at the point where said transit portion (20a, 20b) is located, respectively configured to isolate said operating chamber (3) from the outside.

12. Equipment (1) according to one or more of the preceding claims, **characterized by** the fact that it comprises at least one air-tight pre-treatment chamber (6), associated with said operating chamber (3) at the point where said inlet section (4) is located and adapted to allow loading said spray cans (S).

13. Equipment (1) according to one or more of the preceding claims, **characterized by** the fact that it comprises at least one air-tight unloading chamber (24) associated with said operating chamber (3) at the point where said transit portion (20a, 20b) is located and adapted to allow the collection of said metal casings (M).

14. Equipment (1) according to one or more of the preceding claims, **characterized by** the fact that it comprises suction means (25) of said gaseous residues, associated with said basic frame (2) and connected in a fluid-operated manner to at least one of either said operating chamber (3), said pre-treatment chamber (6) or said unloading chamber (24).

15. Equipment (1) according to one or more of the preceding claims, **characterized by** the fact that it comprises generation means for generating an inert atmosphere (18), associated with said basic frame (2) and connected in a fluid-operated manner to at least one of either said operating chamber (3), said pre-treatment chamber (6) or said unloading chamber (24) and adapted to generate an inert atmosphere inside at least one of them.
